# EUROPEAN PATENT APPLICATION

(11) **EP 4 691 330 A1**
(43) Date of publication of application: **11.02.2026**
(21) Application number: 24773930.3
(22) Date of filing: 07.03.2024
(51) Int. Cl.: A47L 1/02, A47L 5/00, A47L 9/00, A47L 11/24, A47L 11/32, A47L 11/38

(54) **AUTOMATIC CLEANING APPARATUS**

(30) Priority: 21.03.2023 CN 202320571678 U
(71) Applicant: Beijing Roborock Technology Co., Ltd., Beijing 102206 (CN)
(72) Inventor: ZHANG, Baokui, Beijing 102206 (CN)
(74) Representative: Lorenz Seidler Gossel Part. mbB
(86) International application number: PCT/CN2024/080628
(87) International publication number: WO 2024/193363

(57) **Abstract**

Provided in the present application is an automatic cleaning apparatus, comprising : a mobile platform, configured to automatically move on an operation surface, the mobile platform comprising a bottom housing; and a cleaning module, configured to be assembled on the bottom housing. The cleaning module comprises: a rolling brush support, configured to support a rolling brush; a motor, arranged on one side of the rolling brush support; and an elastic member, arranged on the side of the rolling brush support close to the motor, wherein the elastic member can be hitched to the bottom housing by means of at least one end.

## Description

### CROSS-REFERENCE TO RELATED APPLICATIONS

The present disclosure is presented based on and claims priority to Chinese patent application No. 202320571678.X filed on March 21, 2023, which is incorporated herein by reference in its entirety.

### TECHNICAL FIELD

The present disclosure relates to the technical field of cleaning robots, and in particular, to an automatic cleaning device.

### BACKGROUND

In recent years, with the development of science and technology, various cleaning devices have emerged one after another. These cleaning devices reduce the workload of people in cleaning and sweeping, meet their needs, and bring great convenience to their lives. At present, in marketavailable sweeping robots, a motor is arranged at an end of the garbage cleaning module to drive the roller brush to rotate, thereby achieving the function of cleaning garbage. However, the left and right ends of the garbage cleaning module are unbalanced in weight, which affects the cleaning performance.

### SUMMARY

An objective of the present disclosure is to provide an automatic cleaning device, which can solve the problem of weight imbalance on the left and right ends of the garbage cleaning module of the automatic cleaning device during the cleaning process.

Embodiments of the present disclosure provide an automatic cleaning device. The automatic cleaning device includes:
a mobile platform configured to automatically move on an operating surface, where the mobile platform includes a bottom housing; and
a cleaning module configured to be assembled on the bottom housing, which includes: a roller brush bracket configured to support a roller brush; a motor arranged on a side of the roller brush bracket; and an elastic member arranged on a side of the roller brush bracket proximal to the motor and configured to be capable of being suspended from the bottom housing through at least one end.

In some embodiments, the cleaning module is provided with a first hanging point and a second hanging point, and the second hanging point is higher than the first hanging point; the bottom housing is provided with a third hanging point; the elastic member includes: a first end configured to be suspended from the first hanging point of the cleaning module; and a second end configured to be suspended from the second hanging point of the cleaning module or the third hanging point of the bottom housing, where the third hanging point of the bottom housing is configured to be connected to the second end of the elastic member in response to a repositioning operation for the second end of the elastic member.

In some embodiments, the second hanging point is arranged at the top of the roller brush bracket and/or the top of the motor.

In some embodiments, the cleaning module further includes:
a gearbox arranged on the side of the roller brush bracket proximal to the motor and configured to transmit driving force of the motor, where the second hanging point is arranged at the top of the gearbox.

In some embodiments, the second hanging point is detachably arranged on the cleaning module.

In some embodiments, the second hanging point includes at least one of the following: a plastic hook, a metal hook, or a screw.

In some embodiments, the second hanging point is integrally arranged at the top of the roller brush bracket and/or the top of the motor.

In some embodiments, the second hanging point is configured such that, when the cleaning module is assembled on the bottom housing, the second hanging point and the third hanging point are substantially on the same horizontal plane.

In some embodiments, the second hanging point is configured such that, when the cleaning module is assembled on the bottom housing, the second hanging point is adjacent to the third hanging point.

In some embodiments, the elastic member includes at least one of the following: a tension spring, an elastic band, or an elastic cord.

In some embodiments, the elastic member is substantially in a vertical direction when the elastic member is stretched between the first hanging point and the second hanging point; the elastic member is also substantially in the vertical direction when the elastic member is stretched between the first hanging point and the third hanging point.

Compared with the prior art, the embodiments of the present disclosure have the following technical effects:
In the present disclosure, the cleaning module is provided with two hanging points, respectively located at high and low positions of the cleaning module. Both ends of the tension spring are first suspended from the high and low hanging points of the cleaning module. After the cleaning module is fixed to the bottom housing of the sweeper, through a repositioning operation for an end of the tension spring (for example, detaching an end of the tension spring from the high hanging point of the cleaning module with a tool and then suspending it from the hanging point of the bottom housing of the sweeper), both ends of the tension spring can be conveniently suspended from the cleaning module and the bottom housing, thereby solving the technical problem of difficulty in suspending the tension spring after removal of the cleaning module's housing.

### BRIEF DESCRIPTION OF THE DRAWINGS

The drawings, which are incorporated into and constitute a part of the specification, illustrate embodiments consistent with the present disclosure and are used in conjunction with the specification to explain the principles of the present disclosure. Apparently, the drawings in the following description are merely some embodiments of the present disclosure, and those of ordinary skill in the art may still derive other drawings from these drawings without creative efforts. In the drawings:
FIG. 1 is an oblique view of an automatic cleaning device according to some embodiments of the present disclosure;
FIG. 2 is a schematic diagram of a bottom structure of an automatic cleaning device according to some embodiments of the present disclosure;
FIG. 3 is a schematic diagram of an overall structure of a cleaning module according to some embodiments of the present disclosure;
FIG. 4 is a schematic diagram of a partial structure of a cleaning module assembled to a bottom housing according to some embodiments of the present disclosure; and
FIG. 5 is a schematic diagram of a partial structure of an elastic member repositioned from a hanging point of a cleaning module to a bottom housing according to some embodiments of the present disclosure.

Description of the reference numerals: mobile platform 100, forward part 111, rearward part 110, sensing system 120, control system 130, driving system 140, cleaning module 150, power system 160, human-machine interaction system 170, position determining apparatus 121, buffer 122, cliff sensor 123, driving wheel assembly 141, steering assembly 142, bottom housing 180, roller brush bracket 151, motor 152, elastic member 153, gearbox 154, first end 1531, second end 1532, first hanging point 1501, second hanging point 1502, and third hanging point 1801.

### DETAILED DESCRIPTION

For clearer descriptions of the objectives, technical solutions, and advantages of the present disclosure, the present disclosure is further described in detail hereinafter with reference to the drawings. Apparently, the described embodiments are merely some embodiments of the present disclosure, rather than all of the embodiments. Based on the embodiments of the present disclosure, all other embodiments obtained by those of ordinary skill in the art without creative efforts shall fall within the protection scope of the present disclosure.

The terms used in the embodiments of the present disclosure are for the purpose of describing particular embodiments only and are not intended to limit the present disclosure. As used in the embodiments and the appended claims of the present disclosure, the singular forms "a", "an", and "the" are intended to include the plural forms as well, unless the context clearly indicates otherwise, and "plurality of" generally includes at least two.

It should be understood that the term "and/or" as used herein is merely a description of an association relationship between associated objects, indicating that three possible relationships may exist. For example, "A and/or B" can represent: the presence of A alone, the simultaneous presence of A and B, and the presence of B alone. In addition, the character "/" herein generally indicates an "or" relationship between the associated objects before and after.

It should be understood that although the terms "first", "second", "third", and the like may be used in the embodiments of the present disclosure to describe, these should not be limited to these terms. These terms are only used for distinction. For example, "first" may also be referred to as "second", and similarly, "second" may also be referred to as "first", without departing from the scope of the embodiments of the present disclosure.

It should be further noted that the terms "comprise", "include", or any other variants thereof, are intended to encompass a non-exclusive inclusion, such that a commodity or an apparatus including a list of elements includes not only those elements, but also other elements not explicitly listed or inherent to such commodity or apparatus. Without further limitation, an element defined by the phrase "comprising a/an..." or "including a/an..." does not exclude the presence of other identical elements in the commodity or apparatus including the element.

Optional embodiments of the present disclosure will be described in detail hereinafter with reference to the drawings.

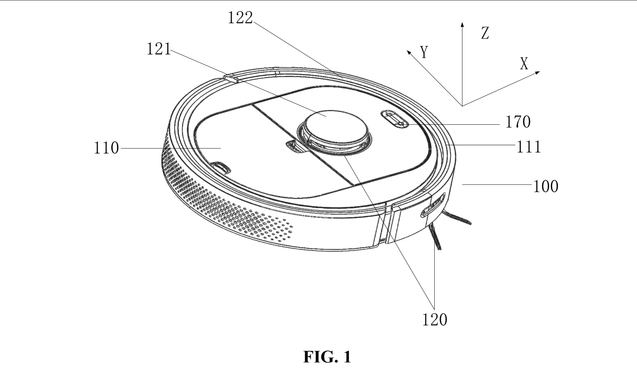

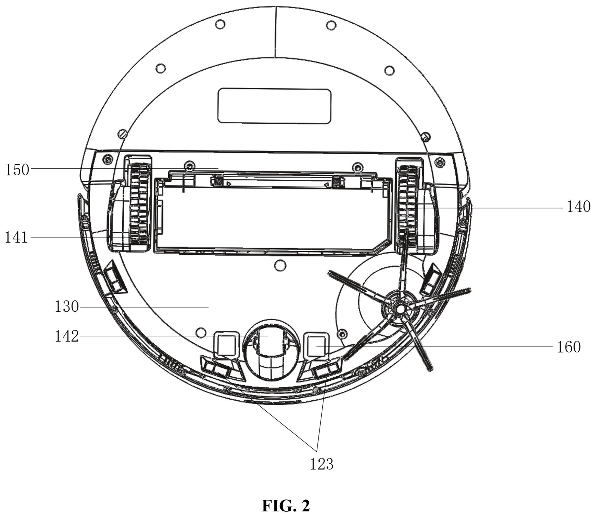

FIGs. 1 and 2 are schematic structural diagrams of an automatic cleaning device according to one exemplary embodiment. As shown in FIGs. 1 and 2, the automatic cleaning device may be a robot vacuum cleaner, a mopping/scrubbing robot, a window cleaning robot, or the like. The automatic cleaning device may include a mobile platform 100, a sensing system 120, a control system 130, a driving system 140, a cleaning module 150, a power system 160, and a human-machine interaction system 170.

The mobile platform 100 may be configured to automatically move in a target direction on an operating surface. The operating surface may be a surface waiting for the automatic cleaning device to perform a cleaning operation. In some embodiments, the automatic cleaning device may be a mopping robot, the automatic cleaning device operates on the ground, and the ground serves as the operating surface. The automatic cleaning device may also be a window cleaning robot, the automatic cleaning device operates on an outer surface of a glass of a building, and the glass serves as the operating surface. The automatic cleaning device may further be a pipeline cleaning robot, the automatic cleaning device operates on an inner surface of a pipeline, and the inner surface of the pipeline serves as the operating surface. For the purpose of illustration only, the following description in the present disclosure is illustrated by taking a mopping robot as an example.

In some embodiments, the mobile platform 100 may be an autonomous mobile platform or a non-autonomous mobile platform. The autonomous mobile platform means that the mobile platform 100 itself can automatically and adaptively make an operational decision based on an unexpected environmental input; the non-autonomous mobile platform itself cannot adaptively make an operational decision based on an unexpected environmental input, but can execute a given procedure or operate according to a certain logic. Correspondingly, when the mobile platform 100 is an autonomous mobile platform, the target direction may be autonomously determined by the automatic cleaning device; when the mobile platform 100 is a non-autonomous mobile platform, the target direction may be set systematically or manually. When the mobile platform 100 is an autonomous mobile platform, the mobile platform 100 includes a forward part 111 and a rearward part 110.

The sensing system 120 includes sensing apparatuses such as a position determining apparatus 121 located on the mobile platform 100, a buffer 122 located in the forward part 111 of the mobile platform 100, a cliff sensor 123 and an ultrasonic sensor (not shown) located at the bottom of the mobile platform, an infrared sensor (not shown), a magnetometer (not shown), an accelerometer (not shown), a gyroscope (not shown), and an odometer (not shown), to provide various position information and motion status information of the machine to the control system 130.

In order to describe the behavior of the automatic cleaning device more clearly, directions are defined as follows: The automatic cleaning device may travel on the ground through various combinations of movements relative to the following three mutually perpendicular axes defined by the mobile platform 100: a transverse axis Y, a front-rear axis X, and a central perpendicular axis Z. A forward driving direction along the front-rear axis X is marked as "forward", and a rearward driving direction along the front-rear axis X is marked as "rearward". The transverse axis Y essentially extends between the right wheel and the left wheel of the automatic cleaning device along an axis defined by the center point of a driving wheel assembly 141. The automatic cleaning device may rotate around the Y axis. It is referred to as "pitch up" when the forward part of the automatic cleaning device is tilted upward and the rearward part of the automatic cleaning device is tilted downward, and it is referred to as "pitch down" when the forward part of the automatic cleaning device is tilted downward and the rearward part of the automatic cleaning device is tilted upward. In addition, the automatic cleaning device may rotate around the Z axis. In the forward direction of the automatic cleaning device, it is referred to as "turn right" when the automatic cleaning device is tilted to the right side of the X axis, and it is referred to as "turn left" when the automatic cleaning device is tilted to the left side of the X axis.

As shown in FIG. 2, cliff sensors 123 are arranged at the bottom of the mobile platform 100 and on the front and back of the driving wheel assembly 141, and the cliff sensors are configured to prevent the automatic cleaning device from falling off when reversing, thereby preventing damage to the automatic cleaning device. The aforementioned "front" refers to a side that is the same as the traveling direction of the automatic cleaning device, and the aforementioned "rear" refers to a side that is opposite to the traveling direction of the automatic cleaning device.

Specific types of the position determining apparatus 121 include, but are not limited to, a camera and a laser ranging apparatus (LDS).

The components in the sensing system 120 may operate independently, or may operate together to more accurately perform the target function. By identifying the surface to be cleaned through the cliff sensors 123 and the ultrasonic sensor, the physical properties of the surface to be cleaned, including a surface material, a degree of cleanliness, and the like can be determined, and the properties may be determined more accurately in combination with a camera, a laser ranging apparatus, and the like.

For example, whether the surface to be cleaned is a carpet may be determined by an ultrasonic sensor. If the ultrasonic sensor determines that the surface to be cleaned is a carpeted surface, the control system 130 controls the automatic cleaning device to perform cleaning in a carpet mode.

The forward part 111 of the mobile platform 100 is provided with the buffer 122. During the cleaning process, when the driving wheel assembly 141 propels the automatic cleaning device to travel on the ground, the buffer 122 detects one or more events (or objects) in the travel path of the automatic cleaning device via a sensor system, such as an infrared sensor. The automatic cleaning device can control the driving wheel assembly 141 based on the events (or objects) detected by the buffer 122, such as an obstacle or a wall, to enable the automatic cleaning device to respond to the events (or objects), such as moving away from the obstacle.

The control system 130 is arranged on a main circuit board in the mobile platform 100, and includes a computing processor, such as a central processing unit or an application processor, that communicates with a non-transitory memory, such as a hard disk, a flash memory, or a random access memory. The application processor is configured to receive environmental information sensed by a plurality of sensors and transmitted from the sensing system 120, draw a real-time map of an environment in which the automatic cleaning device is located by using a positioning algorithm, such as SLAM based on obstacle information fed back by the position determining apparatus 121, etc., autonomously determine a travel path based on the environmental information and the environmental map, and then control the driving system 140 to perform operations such as traveling forward, traveling rearward, and/or steering according to the autonomously determined travel path. Further, the control system 130 may also determine whether to activate the cleaning module 150 to perform a cleaning operation based on the environmental information and the environmental map.

Specifically, with reference to distance information and speed information that are fed back by sensing apparatuses such as the buffer 122, the cliff sensor 123, the ultrasonic sensor, the infrared sensor, the magnetometer, the accelerometer, the gyroscope, and the odometer, the control system 130 can comprehensively determine the current operating state of the sweeper, such as crossing a doorsill, getting onto a carpet, being located at a cliff, being stuck from above or below, having a full dust box, or being picked up. In addition, a specific strategy for a next action is given for different cases, such that the automatic cleaning device operates more in line with the requirements of the user and achieves a better user experience. Further, the control system can plan the most efficient and reasonable cleaning path and cleaning mode based on the information in the real-time map drawn by using SLAM, thereby greatly improving the dust pickup efficiency of the automatic cleaning device.

The driving system 140 may execute a driving command based on specific distance and angle information, for example, x, y, and θ components, to steer the automatic cleaning device to run across the ground. As shown in FIG. 2, the driving system 140 includes the driving wheel assembly 141. The driving system 140 may simultaneously control the left wheel and the right wheel. To more precisely control the movement of the machine, the driving system 140 preferably includes a left driving wheel assembly and a right driving wheel assembly. The left and right driving wheel assemblies are symmetrically arranged along a transverse axis defined by the mobile platform 100.

To enable the automatic cleaning device to move more stably on the ground or to achieve stronger mobility, the automatic cleaning device may include one or more steering assemblies 142. Each steering assembly 142 may be either a driven wheel or a driving wheel, and may adopt structural forms including but not limited to a universal wheel. The steering assembly 142 may be located in front of the driving wheel assembly 141.

The power system 160 includes a rechargeable battery, for example, a nickel-hydrogen battery and a lithium battery. The rechargeable battery may be connected to a charging control circuit, a battery pack charging temperature detection circuit, and a battery undervoltage monitoring circuit. The charging control circuit, the battery pack charging temperature detection circuit, and the battery undervoltage monitoring circuit are then connected to a single-chip microcomputer control circuit. The main machine is charged through connection to a charging pile via charging electrodes arranged on the side or bottom of the machine body.

The human-machine interaction system 170 includes a button on a host panel for a user to select a function. The human-machine interaction system 170 may further include at least one of a display screen, an indicator light, and a speaker. The display screen, the indicator light, and the speaker show a current state of the machine or function options to the user. The human-machine interaction system 170 may further include a mobile phone client program. For a path navigation type cleaning device, the map of the environment in which the device is located and the location of the machine may be shown through a mobile phone client to the user, providing the user with richer and more user-friendly function options.

As shown in FIG. 2, the cleaning module 150 may include a dry cleaning module.

The dry cleaning module includes a dust box, a fan, and a main brush module. The main brush module sweeps the garbage on the ground to the front of a dust suction inlet between the main brush module and the dust box by performing a reciprocating swinging motion near the ground, and then the garbage is sucked into the dust box by the gas with suction generated by the fan and passing through the dust box. The dust removal capacity of the sweeper may be characterized by the dust pickup efficiency (DPU) of the garbage. The DPU is affected by the wind force utilization rate of an air duct formed by the dust suction inlet, the dust box, the fan, the air outlet, and connecting components among the four, and is affected by the type and power of the fan, thereby posing a complex system design problem. Compared with a conventional plug-in vacuum cleaner, the improvement in the dust removal capacity of the sweeper is more significant for an automatic cleaning device with limited energy. The improvement in the dust removal capacity directly and effectively reduces the energy requirements. That is, a machine that can sweep 80 square meters of the ground on a single charge can be evolved to sweep 180 square meters or more on a single charge. In addition, the service life of the battery with a reduced quantity of charging times is greatly increased, such that the frequency of replacing the battery by the user is also reduced. More visually and importantly, the improvement in the dust removal capacity is the most obvious and important user experience, and the user will directly draw a conclusion on whether the sweeping/wiping is thorough. The dry cleaning module may further include a side brush with a rotation shaft that is angled relative to the ground to be configured to move debris into the roller brush region of the cleaning module 150.

In the related art, a motor is arranged at an end of the cleaning module to drive the roller brush to rotate, thereby achieving the function of cleaning garbage. Due to the existence of the motor, the left and right ends of the cleaning module are unbalanced in weight, which affects the cleaning performance. A spring may be added on a side of the motor to partially offset the weight of the motor. When a fixing housing is provided outside the cleaning module, the tension spring is stretched between the roller brush bracket and the fixing housing, and the fixing housing is fixed to the bottom housing of the cleaning device by screws to complete the fixing of the tension spring.

However, when there is no fixing housing outside the cleaning module, that is, when the cleaning module is directly fixed to the bottom housing of the cleaning device, an end of the tension spring cannot be directly fixed to the bottom housing of the cleaning device in the absence of the fixing housing, which makes the assembly of the cleaning device and the tension spring difficult.

To this end, the embodiments provide an automatic cleaning device. The automatic cleaning device includes: a mobile platform and a cleaning module. The mobile platform is configured to automatically move on an operating surface. The mobile platform includes a bottom housing and a cleaning module configured to be assembled on the bottom housing. The cleaning module includes: a roller brush bracket configured to support a roller brush; a motor arranged on a side of the roller brush bracket; and an elastic member arranged on a side of the roller brush bracket proximal to the motor and configured to be capable of being suspended from the bottom housing through at least one end.

In some embodiments, the cleaning module is provided with a first hanging point and a second hanging point, and the second hanging point is higher than the first hanging point; the bottom housing is provided with a third hanging point; the elastic member includes: a first end configured to be suspended from the first hanging point of the cleaning module; and a second end configured to be suspended from the second hanging point of the cleaning module or the third hanging point of the bottom housing. The third hanging point of the bottom housing is configured to be connected to the second end of the elastic member in response to a repositioning operation for the second end of the elastic member.

In the present disclosure, the cleaning module is provided with two hanging points, respectively located at high and low positions of the cleaning module. Both ends of the tension spring are first suspended from the high and low hanging points of the cleaning module. After the cleaning module is fixed to the bottom housing of the sweeper, through a repositioning operation for an end of the tension spring (for example, detaching an end of the tension spring from the high hanging point of the cleaning module with a tool and then suspending it from the hanging point of the bottom housing of the sweeper), both ends of the tension spring can be conveniently suspended from the cleaning module and the bottom housing, thereby solving the technical problem of difficulty in suspending the tension spring after removal of the cleaning module's housing.

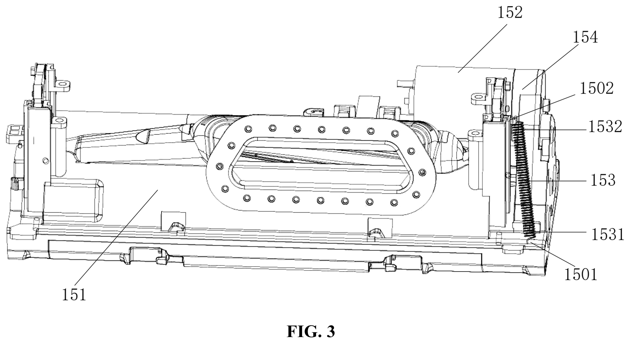

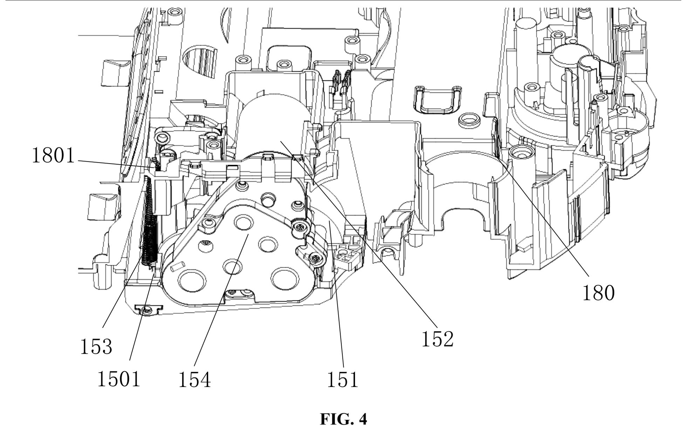

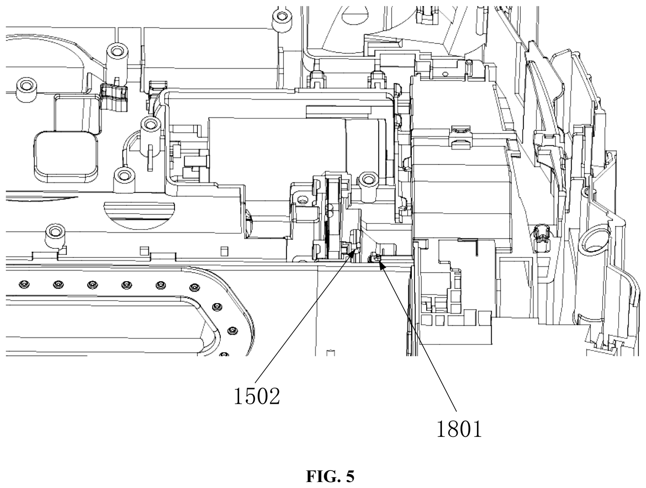

Specifically, the present disclosure will be described in detail with reference to FIGs. 3 to 5. In the automatic cleaning device according to the embodiments of the present disclosure, as an example, FIG. 3 is a schematic diagram illustrating an overall structure of a cleaning module of an automatic cleaning device, FIG. 4 is a schematic diagram illustrating a partial structure of a cleaning module assembled on a bottom housing, and FIG. 5 is a schematic diagram illustrating a partial structure of an elastic member repositioned from a hanging point of a cleaning module to a bottom housing.

As shown in FIGs. 3 to 5, the embodiments of the present disclosure provide an automatic cleaning device. The automatic cleaning device includes a mobile platform 100, the mobile platform 100 is configured to automatically move on an operating surface (e.g., a ground), and the mobile platform includes a bottom housing 180. The automatic cleaning device further includes a cleaning module 150, the cleaning module 150 is assembled on the bottom housing 180 through screws or bolts, the cleaning module 150 includes a roller brush bracket 151, the roller brush bracket 151 is configured to support a roller brush, and the roller brush rotates under the support of the roller brush bracket 151 and cleans the ground. The cleaning module 150 further includes a motor 152, and the motor 152 is generally arranged on a side of the roller brush bracket 151; that is, the motor 152 is offset to a side of the centerline of the roller brush bracket 151, thereby avoiding the position of an air duct. The roller brush bracket 151 further includes an elastic member 153, and the elastic member 153 may be, for example, a tension spring, an elastic band, or an elastic cord. The elastic member 153 is arranged on a side of the roller brush bracket 151 proximal to the motor 152. A first end 1531 of the elastic member 153 is suspended from a first hanging point 1501 of the cleaning module 150, a second end 1532 of the elastic member 153 is suspended from a second hanging point 1502 of the cleaning module 150, and the second hanging point 1502 is higher than the first hanging point 1501. The bottom housing 180 is provided with a third hanging point 1801. The third hanging point is configured to respond to an operation on the second end 1532 of the elastic member 153, for example, a repositioning operation such as detaching the elastic member 153 from the second hanging point 1502 of the cleaning module 150 with a tool (e.g., a hook, pliers, or a clip) and attaching it to the third hanging point 1801 of bottom housing of the cleaning device. In this way, the second end 1532 of the elastic member 153 is repositioned from the second hanging point 1502 to the third hanging point 1801, thereby easily achieving the purpose of suspending both ends of the elastic member 153 from the cleaning module 150 and the bottom housing 180, respectively. In this case, due to the elastic pull of the elastic member, the pressure applied by the heavier end of the cleaning module on the ground is reduced, thereby balancing the pressure applied by both ends of the roller brush on the ground. As a result, the cleaning module cleans the ground more evenly, and the offset wear of the roller brush is also alleviated.

In some embodiments, as shown in FIG. 3, the first hanging point 1501 is substantially located at the lower edge of the roller brush bracket 151 of the cleaning module, and the second hanging point 1502 is substantially arranged at the top of the roller brush bracket 151, for example, at the highest position or a relatively high position extending upward corresponding to the first hanging point 1501. The top extends through an opening on the bottom housing 180 after the roller brush bracket 151 is assembled on the bottom housing 180, thereby facilitating the repositioning of the elastic member from the second hanging point 1502 to the bottom housing 180.

In some embodiments, the second hanging point 1502 may also be substantially arranged at the top of the motor 152, for example, at the highest position or a relatively high position extending upward corresponding to the first hanging point 1501. The top extends through the opening on the bottom housing 180 after the roller brush bracket 151 is assembled on the bottom housing 180, thereby facilitating the repositioning of the elastic member from the second hanging point 1502 to the bottom housing 180.

In some embodiments, as shown in FIG. 3, the cleaning module 150 further includes a gearbox 154. The gearbox 154 is arranged on a side of the roller brush bracket 151 proximal to the motor 152, and the gearbox 154 is configured to transmit the driving force of the motor 152 to the roller brush or other components. The second hanging point 1502 may also be arranged at the top of the gearbox 154, for example, at the highest position or a relatively high position extending upward corresponding to the first hanging point 1501. The top extends through the opening on the bottom housing 180 after the roller brush bracket 151 is assembled on the bottom housing 180, thereby facilitating the repositioning of the elastic member from the second hanging point 1502 to the bottom housing 180.

In some embodiments, the second hanging point may be integrally arranged at the top of the roller brush bracket and the top of at least one of the motor and the gearbox. For example, a protruding structure, such as a protruding hook, is arranged at the top of the roller brush bracket, and/or the top of the motor, and/or the top of the gearbox by a die-based integral molding process, thereby facilitating the suspension of the elastic member. The integral structure ensures that the second hanging point remains stable and does not fall off during the elastic member's tensioning, thereby avoiding assembly issues with the elastic member.

In some embodiments, the second hanging point may be a detachable structure arranged on the cleaning module, for example, a plastic hook, a metal hook, or a screw. These hooks are temporarily hooked or adhered to the top of at least one of the roller brush bracket, the motor, or the gearbox, thereby temporarily serving as the second hanging point for suspending the elastic member. After the elastic member is repositioned to the third hanging point, the detachable second hanging point may be detached and removed to reduce the weight of the cleaning module. In addition, the detachable structure may be flexibly arranged according to the size of the space at the assembly position, making it more convenient to use.

In some embodiments, as shown in FIG. 5, the second hanging point 1502 is configured such that, when the cleaning module 150 is assembled on the bottom housing 180, the second hanging point 1502 and the third hanging point 1801 are substantially on the same horizontal plane. In this case, since the third hanging point 1801 is substantially located on the outer side of the bottom housing 180, and the second hanging point 1502 is also substantially located on the outer side of the bottom housing 180, it is convenient for the user to operate and reposition the elastic member from the second hanging point 1502 to the third hanging point 1801 using a tool.

In some embodiments, as shown in FIG. 5, the second hanging point 1502 is configured such that, when the cleaning module 150 is assembled on the bottom housing 180, the second hanging point 1502 is adjacent to the third hanging point 1801. Optionally, for example, the second hanging point 1502 is arranged adjacent to and opposite to the third hanging point 1801. In this way, the user can reposition the second hanging point 1502 to the third hanging point 1801 more conveniently.

In some embodiments, as described above, since the first hanging point 1501 is substantially located at the lower edge of the roller brush bracket 151 of the cleaning module, and the second hanging point 1502 and the third hanging point 1801 are both located at a position higher than the first hanging point 1501, the elastic member 153 is substantially in a vertical direction when the elastic member is stretched between the first hanging point 1501 and the second hanging point 1502, and the elastic member 153 is also substantially in the vertical direction when the elastic member is stretched between the first hanging point 1501 and the third hanging point 1801. The substantially vertical direction may be considered as that an included angle between the extension direction of the elastic member and a vertical line is within a range of 10 degrees, thereby ensuring that the stretching force of the elastic member is substantially in the vertical direction. In a limited stretching range, the elastic member is mainly configured to effectively offset the gravity of the motor and/or the gearbox.

In the present disclosure, the cleaning module is provided with two hanging points, respectively located at high and low positions of the cleaning module. Both ends of the tension spring are first suspended from the high and low hanging points of the cleaning module. After the cleaning module is fixed to the bottom housing of the sweeper, through a repositioning operation for an end of the tension spring (for example, detaching an end of the tension spring from the high hanging point of the cleaning module with a tool and then suspending it from the hanging point of the bottom housing of the sweeper), both ends of the tension spring can be conveniently suspended from the cleaning module and the bottom housing, thereby solving the technical problem of difficulty in suspending the tension spring after removal of the cleaning module's housing.

Finally, it should be noted that the embodiments in the specification are described in a progressive manner, and each embodiment focuses on differences from other embodiments, and reference should be made to each other for the same or similar parts.

The above embodiments are only used to illustrate the technical solutions of the present disclosure, but not to limit them; although the present disclosure has been described in detail with reference to the foregoing embodiments, those of ordinary skill in the art should understand that they can still modify the technical solutions recorded in the foregoing embodiments, or make equivalent substitutions for some of the technical features; and these modifications or substitutions do not make the essence of the corresponding technical solutions deviate from the spirit and scope of the technical solutions in the embodiments of the present disclosure.

## Claims

1. An automatic cleaning device, comprising:
a mobile platform, configured to automatically move on an operating surface, wherein the mobile platform comprises a bottom housing; and
a cleaning module, configured to be assembled on the bottom housing, and comprising:
a roller brush bracket, configured to support a roller brush;
a motor, arranged on a side of the roller brush bracket; and
an elastic member, arranged on a side of the roller brush bracket proximal to the motor and configured to be capable of being suspended from the bottom housing through at least one end.

2. The automatic cleaning device according to claim 1, wherein the cleaning module is provided with a first hanging point and a second hanging point, and the second hanging point is higher than the first hanging point;
the bottom housing is provided with a third hanging point;
the elastic member comprises:
a first end, configured to be suspended from the first hanging point of the cleaning module; and
a second end, configured to be suspended from the second hanging point of the cleaning module or the third hanging point of the bottom housing,
wherein the third hanging point of the bottom housing is configured to be connected to the second end of the elastic member in response to a repositioning operation for the second end of the elastic member.

3. The automatic cleaning device according to claim 2, wherein the second hanging point is arranged at a top of the roller brush bracket and/or a top of the motor.

4. The automatic cleaning device according to claim 2, wherein the cleaning module further comprises:
a gearbox, arranged on the side of the roller brush bracket proximal to the motor and configured to transmit driving force of the motor, wherein the second hanging point is arranged at a top of the gearbox.

5. The automatic cleaning device according to claim 2, wherein,
the second hanging point is detachably arranged on the cleaning module.

6. The automatic cleaning device according to claim 5, wherein the second hanging point comprises at least one of the following: a plastic hook, a metal hook, or a screw.

7. The automatic cleaning device according to claim 3, wherein the second hanging point is integrally arranged at the top of the roller brush bracket and/or the top of the motor.

8. The automatic cleaning device according to claim 2, wherein the second hanging point is configured such that, when the cleaning module is assembled on the bottom housing, the second hanging point and the third hanging point are substantially on a same horizontal plane.

9. The automatic cleaning device according to claim 2, wherein the second hanging point is configured such that, when the cleaning module is assembled on the bottom housing, the second hanging point is adjacent to the third hanging point.

10. The automatic cleaning device according to claim 2, wherein the elastic member comprises at least one of the following: a tension spring, an elastic band, or an elastic cord.

11. The automatic cleaning device according to claim 2, wherein the elastic member is substantially in a vertical direction when the elastic member is stretched between the first hanging point and the second hanging point; the elastic member is also substantially in the vertical direction when the elastic member is stretched between the first hanging point and the third hanging point.
